Europäisches Patentamt

European Patent Office

Office européen des brevets

(11) Publication number: **0 098 047 B1**

# EUROPEAN PATENT SPECIFICATION

(45) Date of publication of patent specification: **22.07.92**   (51) Int. Cl.⁵: **H02P  9/00**, H02P 9/04, F03B 15/06, //H02J9/06

(21) Application number: **83303020.8**

(22) Date of filing: **25.05.83**

(54) **Electrical control systems.**

(30) Priority: **25.05.82 GB 8215151**
            **21.09.82 GB 8226919**

(43) Date of publication of application:
    **11.01.84 Bulletin  84/02**

(45) Publication of the grant of the patent:
    **22.07.92 Bulletin  92/30**

(84) Designated Contracting States:
    **AT BE CH DE FR GB IT LI LU NL SE**

(56) References cited:
    **EP-A- 0 066 490      CH-A- 286 240**
    **CH-A- 286 270        FR-A- 1 589 454**
    **GB-A- 2 006 998      US-A- 1 766 548**
    **US-A- 2 015 556**

(73) Proprietor: **THAMESMEAD ENGINEERING LTD**
    **Columbia House 69 Aldwych**
    **London WC2B 4DY(GB)**

(72) Inventor: **Payne, Richard Dudley**
    **Headley Cottage Weston Green**
    **Thames Ditton Surrey KT7 0JY(GB)**
    Inventor: **Simpson, Eric Ernest**
    **165 Weston Road**
    **Billericay Essex(GB)**

(74) Representative: **Williams, John Francis**
    **WILLIAMS, POWELL & ASSOCIATES 34**
    **Tavistock Street**
    **London WC2E 7PB(GB)**

EP 0 098 047 B1

Rank Xerox (UK) Business Services

## Description

This invention relates to an electrical control system, in particular a system for controlling a generating set and to a method of operating an electrical supply system.

A generating set includes a prime mover and an electrical generator, and may supply a load within its own system or may supply a grid. The prime mover might be a water-driven turbine, or a diesel engine, for example. The output power to the load from the generating set is not readily controlled by mechanical means, and not rapidly. Electrical control tends to involve dissipation of energy in a non-useful way.

Proposals have been made to provide control of a generator by keeping the load constant. In British Patent Specification 2006998A, for example, a ballast load is shunted across the actual load, and is controlled in dependence upon the generator output voltage or frequency. Nevertheless, such systems are incomplete, in that although the load supplied may be kept substantially constant, nothing is done to alter the running of the prime mover, so that the generator output is matched to the new actual load.

An auxiliary load is also used in specification CH-A-286240. In this, a prime mover drives an electrical generator connected to a consumer load and an auxiliary load (in this case a water resistor). A control system, responsive to the speed of the prime mover, controls the control gate of the latter as well as the moving part of the auxiliary load. A dashpot in conjunction with springs ensures that the power consumed by the auxiliary load always tends back automatically to a pre-determined mean value following a change induced by the control system. Variation of running of the prime mover necessarily entails a temporary change in the power in the auxiliary load; there is no possibility of varying the prime mover without affecting the auxiliary load. Moreover, in normal running i.e. other than at startup and closedown, the system is set to waste power in the auxiliary load.

Accordingly, the invention proposes an electrical system comprising a prime mover driving an electrical generator a control for the prime mover a consumer load and an auxiliary load fed by the electrical generator and a control system receiving signals corresponding to at least one electrical operating parameter of the generator characterised in that said control system is arranged to vary the proportions of the power output of the generator received by the consumer load and the auxiliary load respectively, in response to either at least one of said operating parameters or to at least one external signal independent of said at least one electrical operating parameter; said control system is arranged to vary the power output of the prime mover independently of the variation of the power apportionment between the loads in response to said at least one external signal independent of said one parameter; and in that the control system effects control of both the loads and the control for the prime mover so that in the normal operating state of the system the auxiliary load receives no or at the most a very small amount of power.

Additionally, the invention proposes a method of operating an electrical supply system including a prime mover driving an electrical generator connected to a consumer load and an auxiliary load, comprising the steps of continuously sensing one or more electrical operating parameters of the generator and controlling the operation thereof, characterised in that:

a) the power received by the respective loads is controlled in response to either at least one of said parameters or to an external signal independent of said one or more parameters;

b) the power output of the prime mover is varied independently of the control of the power to the loads in response to an external signal independent of said one parameter;

c) and a control system effects control of both load and prime mover so that in the normal operating state the auxiliary load receives no or at the most a very small amount of power.

The total load control may additionally be achieved by means of a device in series with the load.

The control of the prime mover may be, for example, control of the gates of a hydraulic turbine, or of the throttle of a diesel engine.

The systems according to the invention have many advantages and uses.

A first allows any generating system to accommodate a step change of a consumer load from 100% to 0% by virtually instantaneous diversion of excess power into an auxiliary resistance bank whilst at the same time, or later, more slowly reducing the prime mover output so as to balance the new consumer demand.

A particular use is for hydro-electric generating plant of the reaction turbine type where with conventional mechanical governors reduction of the water flow through the machine can take some seconds and the machine will accelerate to an overspeed of typically about 30% whilst the control gates are being closed to the new position. At the same tame care must be exercised to prevent an excessive pressure rise from occurring in the supply penstock due to the hydraulic shock effect of sudden closure.

Using the new system, the speed rise upon 100% load shedding can be maintained typically within +1%, whilst allowing the water flow to be reduced as slowly as necessary in consideration of the hydraulic conditions in the penstock.

Conversely, it is possible to accommodate a step increase in consumer load from 0-100 % given that a prior load demand signal is available. Using this signal, the prime mover power output can be increased to maximum and the excess power generated temporarily dissipated into the auxiliary load. Once generating at full power, then the new consumer load may be switched on, and the control system can immediately transfer power into that load from the auxiliary load.

This is also advantageous in hydro-electric reaction-type machines, due to the time taken to open the gates and increase water flow into the unit. Without this system, large flywheels are commonly required to minimise the speed drop which otherwise occurs.

The invention also finds use on diesel driven generating plant where a turbocharged engine is used. These generally cannot accept step load increases greater than about 60 % of their rated power due to the time necessary to accelerate the blower to full speed. Use of the invention enables the power to be increased before the new load is switched on.

If a prior load demand signal is not available, then a series load control unit may in certain cases be used in the system to soften the suddenness of the effect of switching the new load onto the prime mover.

Use of the invention is recommended for many electrical consumers who require voltage and frequency kept within narrow limits for correct functioning e.g. computer power supplies, lighting circuits, etc. With conventional governing methods, these consumers cannot be connected onto supply systems subject to heavy switching transients, as the generating sets would not be able to maintain speed and voltage accurately enough to keep within the required tolerances. A system according to the invention, including either a prior load demand signal or series load control unit would be able to meet this requirement.

The invention further finds application when the power to the consumer is to be controlled so that the supply system is not overloaded either when switching on loads or when generating at less than normal capacity. A particular application is on hydro-electric or steam turbine driven syncronous generating sets supplying resistive loads such as storage or immersion heaters, or alternatively feeding into a battery system for energy storage. Hydro sets are commonly used to recover energy in this way from small streams in remote areas.

In this case, a series load control unit is used to ensure that when switching on any load, this is smoothly imposed onto the prime mover in a way which allows time for the prime mover to increase power to the new output required. In case the prime mover cannot provide sufficient power then the series load control device will restrict output to the load so as to maintain the controlled variable (frequency, voltage etc).

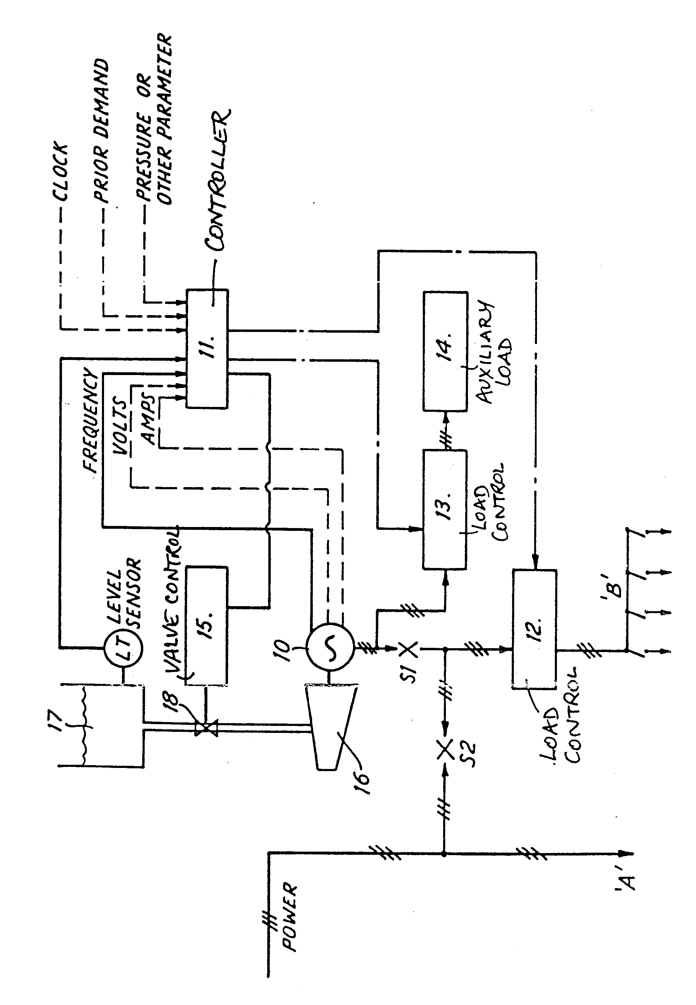

In order that the invention shall be clearly understood, an exemplary embodiment thereof will now be described with reference to the accompanying drawing, which shows a block diagram of a governing system for controlling a water turbine driven generating set.

A water turbine 16 driving a generator 10 is supplied by a reservoir 17 through a control gate 18. This generator set supplies essential consumers B in the event of mains failure. Otherwise, the generator is in parallel with the mains network via an isolating switch S2, and supplies also non-essential consumers A. In addition the generator set can be isolated by switch S1. In the drawing, the main supply and signal connections are shown in bold lines; the dashed lines represent additional control possibilities.

A controller 11 receives as its basic signal the frequency of the generator 10, and uses this as the determining factor in issuing output control signals. The supply from the generator to consumers B, and the output of the generator are controlled in three ways : by a series connected load control 12 e.g. a thyristor which can reduce the voltage to consumers B: by operation of an auxiliary load 14 which can instantaneously absorb or shed excess power ; and by influencing the power input to the generator by opening and closing control gate 18 using a valve control 15.

During startup and synchronisation to the mains, switch S1 is opened, and the desired speed to produce a desired generation frequency i.e. normally mains frequency, is achieved by external operation of controller 11. This is used to operate the auxiliary load control 13. The valve control 15 is held at this stage in a partly open state to allow for control in either direction.

At synchronism, S1 is closed and the speed setting of controller 11 is raised about 1 Hz above that of the mains, and a level control function put in operation.

The valve control 15 is then regulated by controller 11 so as to maintain a desired level in the reservoir 17. Power generated is fed to consumers A and B, and any shortfall from generator 10 is supplied from the mains.

In the event of mains failure, switch S2 is opened and the generator set is required to feed consumers B in isolation. In these circumstances, it is unlikely that the output of the set will precisely match the demand, and its speed will therefore rise or fall depending upon whether the output is greater or less than required. The speed change will alter the frequency, and this is sensed in the controller 11.

It is then possible immediately to manipulate the auxiliary load control 13 so as to match the load to the actual output, but this may involve wasteful dissipation of energy. Therefore simultaneously, controller 11 will pass a signal to valve control 15 thus increasing or decreasing appropriately the power input to the generator 10. In certain circumstances, of course, it may be necessary also to actually reduce the total load of consumers B using control 12 if it cannot be supplied entirely by the generator set.

Normally, however, the system is operated so that there is no continuous dissipation of energy in auxiliary load 14, or any power reduction to consumers by control 12 during steady state operations at any level of electrical system loading.

Since an increased flow may cause the level of reservoir 17 to drop unduly, a warning signal may be necessary to alert an operator to the continuing depletion.

In a modification of this system, certain vital consumers may receive their load by a supply tapped in between switch S1 and control 12. They will be supplied then without any danger of voltage drop.

**Claims**

1. An electrical system comprising a prime mover (16,17) driving an electrical generator (10); a control (15) for the prime mover (16,17); a consumer load (B) and an auxiliary load (14) fed by the electrical generator (10); and a control system (11) receiving signals corresponding to at least one electrical operating parameter of the generator (10), characterised in that said control system (11) is arranged to vary the proportions of the power output of the generator (10) received by the consumer load (B) and the auxiliary load (14) respectively, in response to either at least one of said operating parameters or to at least one external signal independent of said at least one electrical operating parameter; said control system (11) is arranged to vary the power output of the prime mover (16,17) independently of the variation of the power apportionment between the loads (B,14) in response to said at least one external signal independent of said one parameter; and in that the control system (11) effects control of both the loads (B,14) and the control (15) for the prime mover (16,17) so that in the normal operating state of the system the auxiliary load (14) receives no or at the most a very small amount of power.

2. An electrical system as claimed in claim 1, wherein additionally said control is effected so that the power output of the generator tends to equal the power consumed by the consumer load.

3. An electrical system as claimed in claim 1 or 2, wherein an additional control (12) is provided in series with the consumer load (B) whereby the power consumed can be controlled so as to maintain a value of said parameter for a period while the power output of the generator (10) is adjusted.

4. An electrical system as claimed in claim 3, wherein said consumer load is in two parts (A,B) in parallel, and said additional control (12) is applied to one part (B) in order to protect the other part (A) from variations in supply characteristics.

5. An electrical system as claimed in any preceding claim wherein the electrical operating parameter sensed is the frequency of the generator output.

6. An electrical system as claimed in claim 5 wherein additionally voltage or current are sensed.

7. An electrical system as claimed in any preceding claim wherein said prime mover is a water turbine (16) and one of the external signals is the water level of the turbine water supply (17).

8. An electrical system as claimed in any preceding claim wherein one of the external signals is determined by a clock.

9. A method of operating an electrical supply system including a prime mover (16,17) driving an electrical generator (10) connected to a consumer load (B) and an auxiliary load (14), comprising the steps of continuously sensing one or more electrical operating parameters of the generator (10) and controlling the operation thereof, characterised in that;

a) the peer received by the respective loads (B, 14) is controlled (via 12,13) in response to either at least one of said parameters or to an external signal independent of said one or more parameters;

b) the power output of the prime mover (16,17) is varied (via 15,18), independently of the control of the power to the loads (B.14), in response to an external signal independent of said one parameter;

c) and a control system (11) effects control of both load (B,14) and prime mover (16,17) so that in the normal operating state the auxiliary load (14) receives no or at the most a very small amount of power.

10. A method as claimed in claim 9, wherein additional consumer load can be supplied instantaneously by applying an external control signal in advance to increase generator output and to temporarily absorb excess power in said auxiliary load until required for the additional consumer load.

**Revendications**

1. Système électrique comprenant une machine motrice principale (16, 17) entraînant un générateur électrique (10), une commande (15) pour la machine motrice (16, 17), une charge utilisatrice (B) et une charge auxiliaire (14) alimentées par le générateur électrique (10) et un système de régulation (11) recevant des signaux correspondant à au moins un paramètre de fonctionnement électrique du générateur (10), caractérisé en ce que le système de régulation (10) précité est agencé en sorte de faire varier les proportions de la sortie d'énergie du générateur (10) reçue par la charge utilisatrice (B) et la charge auxiliaire (14), respectivement, en réponse à au moins un des paramètres de fonctionnement précités ou à au moins un signal externe indépendant dudit paramètre de fonctionnement électrique; en ce que le système de régulation (11) précité est agencé en sorte de faire varier la sortie d'énergie de la machine motrice (16, 17) indépendamment de la variation du rapport d'énergie entre les charges (B, 14) en réponse audit signal externe indépendant du paramètre cité; et en ce que le système de régulation (11) assure le réglage des deux charges (B, 14) et la commande de soupape (15) de la machine motrice (16, 17) en sorte que, dans l'état de fonctionnement normal du système, la charge auxiliaire (14) ne reçoive pas d'énergie ou en reçoive au maximum une très faible quantité.

2. Système électrique selon la revendication 1, dans lequel, en outre, la régulation précitée est effectuée en sorte que la sortie d'énergie du générateur tende à égaler l'énergie consommée par la charge utilisatrice.

3. Système électrique salon la revendication 1 ou 2, dans lequel un moyen de réglage supplémentaire (12) est installé en série avec la charge utilisatrice (B) en sorte que l'énergie consommée puisse être contrôlée afin de maintenir une valeur du paramètre précité pendant une certaine période, tandis que la sortie d'énergie du générateur (10) est ajustée.

4. Système électrique selon la revendication 3, dans lequel la charge utilisatrice précitée se présente sous forme de deux parties (A, B) en parallèle et le moyen de réglage supplémentaire (12) précité est appliqué à une partie (B) de manière à protéger l'autre partie (A) vis-à-vis de variations des conditions d'alimentation.

5. Système électrique selon l'une quelconque des revendications précédentes, dans lequel le paramètre de fonctionnement électrique détecté est la fréquence de la sortie du générateur.

6. Système électrique selon la revendication 5, dans lequel on détecte en outre la tension ou le courant.

7. Système électrique selon l'une quelconque des revendications précédentes, dans lequel la machine motrice précitée est une turbine à eau (16) et l'un des signaux externes est le niveau d'eau de la source d'eau (17) de la turbine.

8. Système électrique selon l'une quelconque des revendications précédentes, dans lequel un des signaux externes est déterminé par une horloge.

9. Procédé d'actionnement d'un système d'alimentation électrique comprenant une machine motrice (16, 17) entraînant un générateur électrique (10) connecté à uné charge utilisatrice (B) et une charge auxiliaire (14), ce procédé consistant à détecter de manière continue un ou plusieurs paramètres de fonctionnement électriques du générateur (10) et à en réguler le fonctionnement, caractérisé en ce que :
a) l'énergie reçue par les charges respectives (B, 14) est réglée (va 12, 13) en réponse à au moins un des paramètres précités ou à un signal externe indépendant du ou des paramètre(s) précité(s);
b) la sortie d'énergie de la machine motrice (16, 17) est modifiée (via 15, 18) indépendamment du réglage de l'énergie appliquée aux charges (B, 14) en réponse à un signal externe indépendant du paramètre précité;
c) et un système de régulation (11) assure le réglage à la fois de la charge (B, 14) et de la machine motrice (16, 17) en sorte que, dans l'état de fonctionnement normal, la charge auxiliaire (14) ne reçoive pas d'énergie ou en reçoive au maximum une très faible quantité.

10. Procédé selon la revendication 9, dans lequel une charge utilisatrice additionnelle peut être alimentée instantanément en appliquant un signal de commande externe en avance pour augmenter la sortie du générateur et absorber momentanément l'excès d'énergie dans la charge auxiliaire précitée jusqu'au niveau requis pour la charge utilisatrice additionnelle.

**Patentansprüche**

1. Elektrisches Regelsystem mit einer Kraftmaschine (16,17), die einen elektrischen Generator (10) antreibt, einem Regler (15) für die Kraftmaschine (16,17), sowie einer Verbrauchslast (B) und einer Hilfslast (14), die von dem elektrischen Generator (10) gespeist werden, und einem Regelsystem (11), das Signale aufnimmt, die wenigstens einem elektrischen Betriebsparameter des Generators (10) entsprechen,
**dadurch gekennzeichnet,**
daß das Regelsystem (11) dazu ausgelegt ist, den Betrag der Leistungsabgabe des Generators (10), der von der Verbrauchslast (B) und der Hilfslast (14) empfangen wird bzw. als Antwort auf entweder wenigstens einen der Betriebsparameter oder zumindest ein äußeres Signal, unabhängig von zumindest dem einen elektrischen Betriebsparameter, zu variieren und daß das Regelsystem (11) dazu ausgelegt ist, daß die Leistungsabgabe der Kraftmaschine (16,17), unabhängig von der Änderung der Leistungskontingentierung zwischen den Lasten (B,14) als Antwort auf wenigstens das eine äußere Signal, unabhängig von dem besagten Parameter, variiert werden kann und daß das Regelsystem (11) die Regelung der beiden Lasten (B,14) und die Regelung der Kraftmaschine (16,17) bewirkt, so daß im normalen Betriebszustand des Systems die Hilfslast (14) keine oder höchstens einen ganz geringen Energiebetrag empfängt.

2. Elektrisches Regelsystem nach Anspruch 1, in welchem zusätzlich der Regler (15) so ausgelegt ist, daß die Leistungsabgabe des Generators (10) dazu dient, die von der Verbraucherlast verbrauchte Leistung auszugleichen.

3. Elektrisches Regelsystem nach Anspruch 1 oder 2, in welchem ein zusätzlicher Regler (12) in Reihe mit der Verbrauchslast (B) geschaltet vorgesehen ist, wobei die verbrauchte Energie so geregelt werden kann, daß ein Betrag des besagten Parameters für eine gewisse Zeitdauer beibehalten wird, während die Leistungsabgabe des Generators (10) eingeregelt wird.

4. Elektrisches Regelsystem nach Anspruch 3, in welchem die Verbraucherlast in zwei Teilen (A,B) parallel geschaltet ist und der zusätzliche Regler (12) für einen Teil (B) gebraucht wird, um den anderen Teil (A) vor Änderungen der Versorgungskenngrößen zu schützen.

5. Elektrisches Regelsystem nach mindestens einem der vorhergehenden Ansprüche, in welchem der abgetastete elektrische Betriebsparameter die Frequenz der Leistungsabgabe des Generators (10) ist.

6. Elektrisches Regelsystem nach Anspruch 5, in welchem zusätzlich Spannung oder Strom abgetastet werden.

7. Elektrisches Regelsystem nach mindestens einem der vorhergehenden Ansprüche, in welchem die Kraftmaschine eine Wasserturbine (16) ist und eines der äußeren Signale der Wasserpegel der Wasserversorgung (17) für die Turbine (16) ist.

8. Elektrisches Regelsystem nach mindestens einem der vorhergehenden Ansprüche, in welchem eines der äußeren Signale durch eine Uhr geregelt wird.

9. Verfahren zum Betrieb eines elektrischen Versorgungsnetzes mit einer Kraftmaschine (16,17), die einen elektrischen Generator (10) antreibt, der mit einer Verbraucherlast (B) und einer Hilfslast (14) verbunden ist und daß die Schritte des kontinuierlichen Abtastens eines oder mehrerer elektrischer Betriebsparameter des Generators (10) sowie dessen Betriebsregelung umfaßt,
**dadurch gekennzeichnet,**
daß :
a) die von der jeweiligen Last (B,14) empfangene Leistung als Antwort auf entweder wenigstens einen der besagten Parameter oder auf ein äußeres Signal, unabhängig von diesem einen oder mehreren Parametern, geregelt wird (über 12,13);
b) die Leistungsabgabe der Kraftmaschine (16,17), unabhängig von der Regelung der Leistung zu den Lasten (B,14), als Reaktion auf ein äußeres Signal, unabhängig von dem besagten Parameter, variiert wird (über 15,18);
c) und ein Regelsystem (11) die Regelung beider Lasten (B,14) und der Kraftmaschine (16,17) bewirkt, so daß im normalen Betriebszustand die Hilfslast (14) keine oder höchstens einen ganz geringen Energiebetrag empfängt.

10. Verfahren nach Anspruch 9, in welchem eine zusätzliche Verbraucherlast schlagartig durch Verwendung eines externen Regelsignals versorgt werden kann, um vorläufig die Leistungsabgabe des Generators zu steigern und kurzzeitig Leistungsspitzen in der Hilfslast aufzufangen, bis diese für die zusätzliche Verbrauchorlast benötigt werden.

EP 0 098 047 B1